# EUROPEAN PATENT SPECIFICATION

(11) **EP 1 559 019 B1**
(45) Date of publication and mention of the grant of the patent: **15.07.2015**
(21) Application number: 03770166.1
(22) Date of filing: 14.10.2003
(51) Int. Cl.: G06F 12/16, G06F 11/14

(54) **METHOD, SYSTEM AND SOFTWARE FOR JOURNALING SYSTEM OBJECTS**
VERFAHREN, SYSTEM UND SOFTWARE ZUR JOURNALISIERUNG VON SYSTEMOBJEKTEN
PROCEDE, SYSTEME ET LOGICIEL POUR JOURNALISER DES OBJETS SYSTEME

(30) Priority: 14.10.2002 NZ 52198302
(43) Date of publication of application: 03.08.2005
(73) Proprietor: Maximum Availability Limited, Auckland (NZ)
(72) Inventor: TARBELL, James, Scott, Eastbourne Wellington (NZ); GARVEY, David, John, Tawa Wellington (NZ)
(74) Representative: Ribeiro, James Michael
(86) International application number: PCT/NZ2003/000228
(87) International publication number: WO 2004/036436

(56) References cited:
- EP-A- 0 550 372
- EP-B- 0 767 435
- US-A- 5 307 498
- US-A- 5 640 561
- SCHULTZ R D ET AL: "AN APPROACH AND MECHANISM FOR AUDITABLE AND TESTABLE ADVANCED-TRANSACTION PROCESSING SYSTEMS" IEEE TRANSACTIONS ON SOFTWARE ENGINEERING, IEEE SERVICE CENTER, LOS ALAMITOS, CA, US, vol. 13, no. 6, 1 June 1987 (1987-06-01), pages 666-676, XP000003533 ISSN: 0098-5589

## Description

### Field of Invention

The present invention relates to a method, system and software for journaling creation, change and deletion of system objects. More particularly, but not exclusively, the present invention relates to a method, system and software for journaling changes to general OS/400 system objects (including program objects, configuration objects, queues and space/memory mapped objects) in order to replicate these changes on the same or a remote system.

### Background to the Invention

Shultz discusses in An approach and mechanism for auditable and testable advanced-transaction processing systems', I EEE Transactions on Software Engineering, Vol. SE-13, No. 6, June 1987, a method of using a probe module to carry out auditing of a system. US Patent 5,307,498 discusses a system that uses hooks in software to capture data.

The IBM OS/400 operating system provides journaling of database changes via integrated system functions. This journaling function is primarily orientated toward recording database record level changes for system recovery, commitment control (e.g. to ensure transaction boundaries), auditing, and to support the replay of changes to a replica database (remote or local). Other system objects, such as programs and configuration objects, are not supported by the database journaling function. For these other system objects an independent *System Audit Journal* is maintained. The creation, deletion and changing of system objects may be recorded in the Audit Journal for the primary purpose of providing an audit of activity related to these objects. When viewed with the intention of providing replication of these objects to a remote or local (copy) the Audit Journal has several significant drawbacks, namely:
1. The Audit Journal entries are deposited and made available to other processes on the system only after the associated object activity has been performed. There is no way of trapping the object activity "as-it-happens". This makes additional processing of the object by another system process difficult since the process, which is performing the object activity, is likely to lock and/or use the object before the related Audit Journal entry can be obtained by some monitoring process.
2. The Audit Journal entries are "system-wide" - there is one journal for all objects on the entire system. This requires any monitoring process to retrieve all of the journal entries even if only a small subset is required for replication.
3. The Audit Journal entries do not contain enough information to perform the associated object activity on another system (or local copy). This requires that any monitoring process must attempt to locate and lock the associated object in an attempt to make a copy prior to another change being performed on the object. If a copy can not be made of the exact state of the object, this state is "lost" and a replication process will be unable to provide the correct object state to a remote (or local copy) system.
4. The only way to serialise Audit Journal entries with a database journal is to attempt to use the journal entry timestamps to merge the Audit Journal entries with the associated database journal entries. This can cause significant overhead in processing the entries for replication. Additionally, when a system has multi-processors the timestamps contained in independent journals may not accurately reflect the exact sequence of operations.

Given these drawbacks, a foolproof method of synchronising system object changes with associated database changes using the Audit Journal has not been available. A method of capturing the content and state of system objects using the same database journal as is used to capture the actual database record level changes would ensure that the database and object changes could be replicated accurately to a remote (or local copy) system.

Since OS/400 system objects are created, changed, and deleted using a standard (finite) set of commands, the most obvious solution to obtaining state information (or making a copy of an object) is to provide replacement commands or to implement a command *exit program.* There are significant drawbacks to both of these approaches

The replacement system commands approach has the following drawbacks:
1. System command parameter interfaces to the associated OS/400 command processing programs can (and often do) change with each release of OS/400. This would cause significant dependency between the replication software and a given release of OS/400.
2. The number and complexity of the commands that would need to be replaced is high (over 150 commands, several with nested lists of parameters). Each command would need it's own replacement processing program as well as significant effort to ensure that each parameter is processed correctly (e.g. as it would be by the original OS/400 command).

The command exit point program approach has the following drawbacks:
1. Neither of the two registered exit points provided by OS/400 allow the associated exit program to be activated after the command has been executed. Therefore, in the case of object creation, change, deletion commands, the exit program is unable to process the resutting object.
2. The QIBM_QCA_CHG_COMMAND exit point is also limited as to the number of exit programs that can be registered. This could prevent some customers from using this exit point if other software uses the exit point.

It is an object of the present invention to provide a method, system and software for journaling system objects which overcomes the above drawbacks or to at least provide the public with a useful choice.

### Summary of the Invention

According to a first aspect of the invention there is provided a computer implemented method of journaling changes to system objects (16) in an operating system with a processor, the method including the steps of, and characterised by, the processor:
i) executing a dummy function (6) in place of a system function (1 2) when the system function (12) is called;
ii) executing the system function (12) under control of the dummy function (6); and
iii) generating by the dummy function (6), copies of system objects (16) changed by the execution of the system function (12), for journaling.

The dummy function may substitute the system function by having a duplicate calling name, and pre-empting the execution of the system function.

An exit point may be associated with the dummy function and an exit program may be registered for the exit point so that during operation of the dummy function the exit program may be executed.

The exit program may handle execution of the system function and capture changes to system objects occurring during such execution. Copies of the changes are generated by the exit program and may be saved to disk or streamed directly to a database system for journaling.

Alternatively, the exit program may be used to retrieve a command string for the system function and transmit this back to the dummy function. The dummy function may then handle execution of the system function and capture changes to system objects occurring during such execution. In such a case, copies of the changes are generated by the dummy function.

Preferably, the dummy function includes a replacement command and a replacement command processing program.

The database system may be incorporated with a replication system and may replicate the changes to other local or remote databases.

Messages or exceptions generated by the system function may be captured into a queue.

The dummy function may complete execution by forwarding any messages or exceptions generated by the system function back to the process which called the system function.

The system objects include program objects, configuration objects, queues and space/memory mapped objects.

Changes to system objects include creation, change, and deletion of system objects.

Preferably the system functions are those found on an OS/400 processor.

Preferably the method includes the steps of:
i) executing the system function during which changes to system objects occur; and
ii) journaling changes to system objects during execution of the system function.

One way that changes to system objects may be journaled during execution of the system function is by integrating journaling commands into the code of the system functions.

Another way that changes to system objects may be journaled during execution of the system function is by associating exit points with the system function so that during execution of the system function an exit program may be called to journal the system objects.

According to a second aspect of the invention there is provided a system for journaling changes to system objects (16) characterised in that the system includes:
i) a processor adapted to execute a dummy function (6) in place of a system function (12) when the system function (12) is called, wherein the dummy function (6) executes the system function (12) and generates copies of system objects (16) changed by the execution of the system function (12) for journaling; and
ii) memory for use by the processor during execution.

Preferably the processor is an AS/400 processor.

According to an embodiment of the invention there is provided software for effecting the method of the first aspect of the invention.

### Brief Description of the Drawing

The invention will now be described by way of example) with reference to the accompanying drawing in which:
Figure 1: shows an illustration of object journaling in relation to a OS/400 Class object.
Figure 2: shows an illustration of an alternative embodiment of the invention.

### Detailed Description of Preferred Embodiments

The following description describes a system object journaling method operating under the OS/400 operating system. It will be appreciated that the method is applicable to other systems with appropriate modifications.

The method uses a combination approach to achieve the desired result; significantly reducing the drawbacks associated with any single approach.

A summary of the steps of the method follows:
i. An exact duplicate of each OS/400 command associated with object changes is made into a new library.
ii. The command processing program of each duplicate command is changed to a common supplier provided program which does not need to process any of the command parameters (and therefore is not affected by command parameter changes).
iii. A QIBM_QCA_RTV_COMMAND exit point program is registered for each (duplicate) command in the new library. This means that the exit program will be called before the associated Command Processing Program (e.g. the program specified in step ii).
iv. The new command library is placed in the system library search list, *above* the normal OS/400 system library (QSYS). This causes normal system users and application programs to invoke the commands from the new library rather than their counterparts in the OS/400 system library (QSYS).
v. The exit point program uses the passed command string, to execute the specified command using the original OS/400 command (in the OS/400 system library). The exit point program is then able to perform its own processing (to capture the object changes) after the OS/400 command has been executed. Any messages sent by the OS/400 command to the exit point program are stored in a temporary queue so that they may be "resent" to the original requestor (e.g. the user and/or application program which submitted the command).
vi. The replacement (duplicate) Command Processing Program is then called by OS/400 (when the exit point program has completed). The common (replacement) Command Processing Program simply resends any messages contained in the temporary queue (placed there in step v).

In an alternative embodiment of the method steps v and vi may be replaced with:
v. The exit point program passes the command string, using a data queue, to the replacement (duplicate) Command Processing Program.
vi. The replacement (duplicate) Command Processing Program executes the specified command using the original OS/400 command (in the OS/400 system library). The (replacement) Command Processing Program, is then able to perform its own processing (to capture the object changes) after the OS/400 command has been executed. Any messages sent by the OS/400 command to the (replacement) Command Processing Program are stored in a temporary queue and "resent" to the original requestor.

The method eliminates the need for a custom replacement command processing program for each duplicated command - a single, common program is used for each command. The use of the duplicate version of the commands to attach the exit point program, allows the exit point program (or the replacement Command Processing Program in the alternative embodiment) to control the processing of the actual system command - performing replication activities both before and after the associated object is created/changed/deleted.

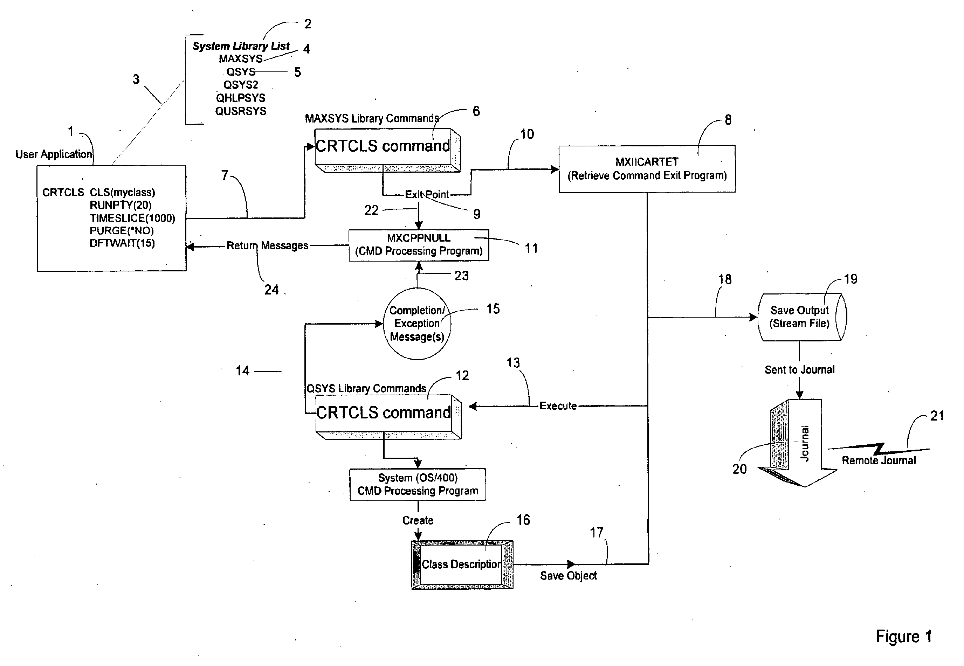

Referring to Figure 1, the invention will be described in relation to journaling of a system object on a primary system for replication to a remote journal where the change to the system object is the creation of a OS/400 *Class* object by a user application and where an exit point program is used to control the processing of the actual system command.

The user application 1 runs with a system library search list 2 that places 3 the duplicate command library 4 (MAXSYS) above the operating system command library 5 (QSYS).

This causes the unqualified CRTCLS (Create Class Description) command 6 to bind 7 to the MAXSYS library version 4 of the command at run-time.

The replication program MXIICARTET 8 is registered as an exit program (using the system defined QIBM QCA_RTV_COMMAND exit point 9) for the MAXSYS version of the CRTCLS command. This causes the MXIICARTET program 8 to be called 10 BEFORE the command's *Command Processing Program* 11 is called. The exit point interface passes the full command string text, as specified by the user application, to the exit program 8.

The exit program 8 performs any required pre-processing to determine if the associated object is defined for replication. The system version of the specified command 12 (in this case, the CRTCLS command) is executed 13 by the MXIICARTET program 8 and any messages generated 14 by the system command are stored in a temporary queue 15.

The affected object 16 (the new class description in this example) is saved 17 to a temporary *save file* by the MXIICARTET program.

The temporary save *file* is then copied 18 to a temporary OS/400 Integrated File System (IFS) stream file 19 which is journaled to the journal 20 used by the associated replication configuration (e.g. the same journal as used for the database files defined for replication). This effectively stores the save image into the journal.

The generated journal data is then transmitted 21 to the remote system(s) for replication using the standard OS/400 remote journal support.

The MXIICARTET program then returns control to its caller 9 (the system exit point), which then calls 22 the Command Processing Program (for the CRTCLS command in the MAXSYS library). For each command in the MAXSYS library, the Command Processing Program is MXCPPNULL 10.

The MXCPPNULL program 10 retrieves 23 the messages stored in the temporary 15 queue (by the MXIICARTET program), that were generated by the standard system version 12 of the command, and sends 24 them to the user application 1. This allows the user application 1 to process the messages exactly as if it had called the system version of the command directly.

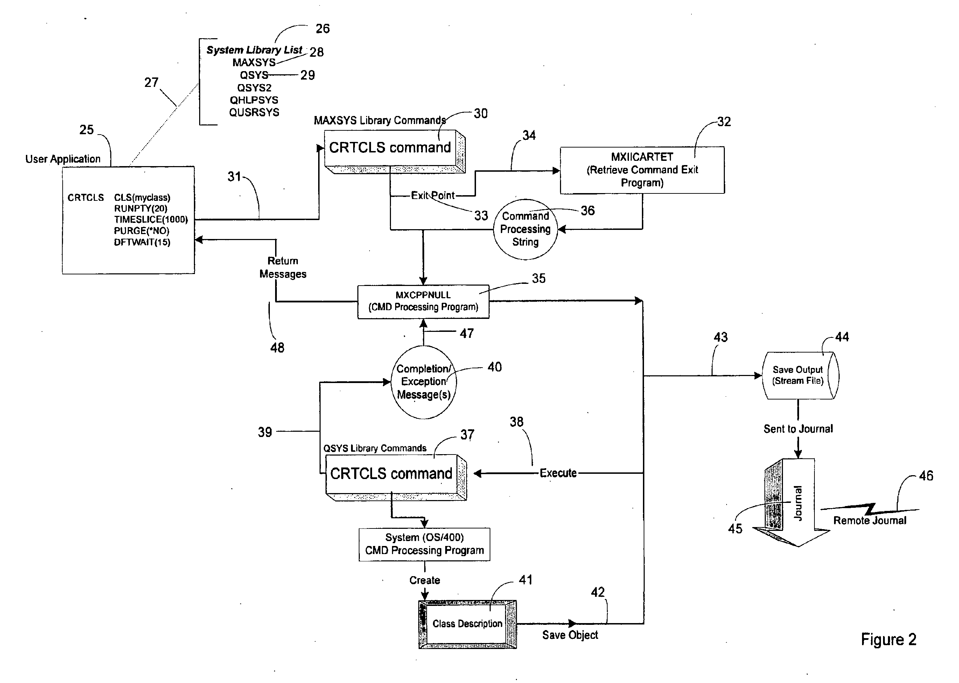

Referring to Figure 2, the invention will be described in relation to journaling of a system object on a primary system for replication to a remote journal where the change to the system object is the creation of an OS/400 *Class* object by a user application and where a replacement Command Processing Program is used to control the processing of the actual system command.

The user application 25 runs with a system library search list 26 that places 27 the duplicate command library 28 (MAXSYS) above the operating system command library 29 (QSYS).

This causes the unqualified CRTCLS (Create Class Description) command 30 to bind 31 to the MAXSYS library version 28 of the command at run-time.

The replication program MXIICARTET 32 is registered as an exit program (using the system defined QIBM_QCA_RTV_COMMAND exit point 33) for the MAXSYS version of the CRTCLS command. This causes the MXIICARTET program 32 to be called 34 BEFORE the command's *Command Processing Program* 35 is called. The exit point interface passes the full command string text, as specified by the user application, to the exit program 32.

The exit program passes the full command string through a data queue 36 to the Command Processing Program (for the CRTCLS command in the MAXSYS library). For each command in the MAXSYS library, the Command Processing Program is MXCPPNULL 35.

The MXIICARTET program 32 then returns control to its caller 33 (the system exit point), and the MXCPPNULL 35 program is executed.

The MXCPPNULL 35 program performs any required pre-processing to determine if the associated object is defined for replication. The full command string is extracted from the data queue 36 and the system version of the specified command 37 (in this case, the CRTCLS command) is executed 38 by the MXCPPNULL program 35 and any messages generated 39 by the system command are stored in a temporary queue 40.

The affected object 41 (the new class description in this example) is saved 42 to a temporary *save file* by the MXCPPNULL program 35.

The temporary *save file* is then copied 43 to a temporary OS/400 Integrated File System (IFS) stream file 44 which is journaled to the journal 45 used by the associated replication configuration (e.g. the same journal as used for the database files defined for replication). This effectively stores the save image into the journal.

The generated journal data is then transmitted 46 to the remote system(s) for replication using the standard OS/400 remote journal support.

The MXCPPNULL program 35 retrieves 47 the messages stored in the temporary 40 queue, that were generated by the standard system version 37 of the command, and sends 48 them to the user application 25. This allows the user application 25 to process the messages exactly as if it had called the system version of the command directly.

**Definitions**

| | |
|---|---|
| **Class (Class Description)** | An object that identifies the run attributes of a job. |
| **Command** | A statement used to request a function of the system. A command consists of the command name abbreviation, which identifies the requested function, and its parameters. |
| **Command Processing Program (CPP)** | A program that processes a command. This program performs some validity checking and processes the |
| | command so that the requested function is performed. |
| **Exit Program** | 1. A user-written program that is given control during operation of a system function. |
| | 2. A program to which control is passed from an exit point. |
| **Save File** | A file allocated in auxiliary storage that can be used to store saved data on disk (without requiring diskettes or tapes). |
| **System Audit Journal** | A journal used by the system to keep a record of security- relevant events that occur. |

## Claims

1. A computer implemented method of journaling changes to system objects (16) in an operating system with a processor, the method including the steps of, and **characterised by**, the processor:
i) executing a dummy function (6) in place of a system function (12) when the system function (12) is called;
ii) executing the system function (12) under control of the dummy function (6); and
iii) generating, by the dummy function (6), copies of system objects (16) changed by the execution of the system function (12), for journaling.

2. A method as claimed in claim 1 wherein the dummy function (6) is executed in place of the system function (12) by assigning a duplicate calling name to the dummy function (6) and arranging the processor to pre-empt the execution of the system function (12) when it is called.

3. A method as claimed in any one of claims 1 to 2 wherein the dummy function (6) includes an exit point (9), and an exit program (8) is registered for the exit point (9).

4. A method as claimed in claim 3 wherein during operation of the dummy function (6) the exit program (8) is executed upon reaching the exit point (9).

5. A method as claimed in claim 4 wherein the execution of the system function (12) is handled by the exit program (8).

6. A method as claimed in claim 5 wherein the system objects (16) changed by execution of the system function (12) are captured by the exit program (8).

7. A method as claimed in claim 6 wherein the exit program (8) generates copies of the system objects (16) captured by the exit program (8).

8. A method as claimed in claim 4 wherein the execution of the system function (12) is handled by the dummy function (6).

9. A method as claimed in claim 8 wherein the system objects (16) changed by execution of the system function (12) are captured by the dummy function (6).

10. A method as claimed in claim 9 wherein the exit program (8) generates copies of the system objects (16) captured by the dummy function (6).

11. A method as claimed in any one of claim 1 to 10 wherein the copies of the system objects (16) are saved to disk.

12. A method as claimed in any one of claims 1 to 11 wherein the copies of the system objects (16) are streamed to a database system for journaling.

13. A method as claimed in claim 12 wherein the database system is incorporated with a replication system.

14. A method as claimed in claim 13 wherein the replication system replicates the copies of the system objects (16) to one or more local or remote databases.

15. A method as claimed in any one of claims 1 to 14 wherein messages or exceptions generated by the system function (12) are captured into a queue.

16. A method as claimed in claim 15 wherein the system function (12) is originally called by a process and the messages or exceptions are forwarded back to the process by the dummy function (6).

17. A method as claimed in any one of claims 1 to 16 wherein the system objects (16) are one or more of the set of program objects, configuration objects, queues, and space/memory mapped objects.

18. A method as claimed in any one of claims 1 to 17 wherein the changed system objects (16) are those system objects which have been created, changed or deleted.

19. A method as claimed in any one of claims 1 to 18 wherein the system functions (12) are OS/400 system functions.

20. A method as claimed in any one of claims 1 to 19 including the steps of:
i) executing the system function (12) during which changes to system objects occur; and
ii) journaling changes to system objects (16) during execution of the system function (12).

21. A method as claimed in claim 20 wherein changes to system objects (16) are journaled by integrating journaling commands into the code of the system functions (12).

22. A method as claimed in claim 20 wherein changes to system objects (16) are journaled by associating exit points (9) with the system function (12) and calling an exit program (8) during execution of the system function (12).

23. A system for journaling changes to system objects (16) **characterised in that** the system includes:
i) a processor adapted to execute a dummy function (6) in place of a system function (12) when the system function (12) is called, wherein the dummy function (6) executes the system function (12) and generates copies of system objects (16) changed by the execution of the system function (12) for journaling; and
ii) memory for use by the processor during execution.

24. A system as claimed in claim 23 wherein the dummy function (6) is executed in place of the system function (12) by assigning a calling name to the dummy function (6) that is a duplicate of the system function (12) calling name to pre-empt the execution of the system function (12).

25. A system as claimed in any one of claims 23 to 24 wherein the dummy function (6) includes an exit point (9), and an exit program (8) is registered for the exit point (9).

26. A system as claimed in claim 25 wherein during execution of the dummy function (6) the exit program (8) is executed upon reaching the exit point (9).

27. A system as claimed in claim 26 wherein the execution of the system function (12) is handled by the exit program (8).

28. A system as claimed in claim 27 wherein the system objects (16) changed by execution of the system function (12) are captured by the exit program (8).

29. A system as claimed in claim 28 wherein the exit program (8) generates copies of the system objects (16) captured by the exit program (8).

30. A system as claimed in claim 26 wherein the execution of the system function (12) is handled by the dummy program (6).

31. A system as claimed in claim 30 wherein the system objects (16) changed by execution of the system function (12) are captured by the dummy program (6).

32. A system as claimed in claim 31 wherein the exit program (8) generates copies of the system objects (16) captured by the dummy program (6).

33. A system as claimed in any one of claims 23 to 32 wherein the copies of the system objects (16) are saved to disk.

34. A system as claimed in any one of claims 23 to 33 wherein the copies of the system objects (16) are streamed to a database system for journaling.

35. A system as claimed in claim 34 wherein the database system is incorporated with a replication system.

36. A system as claimed in claim 35 wherein the replication system replicates the copies of the system objects (16) to one or more local or remote databases.

37. A system as claimed in any one of claims 23 to 36 wherein messages or exceptions generated by the system function (12) are captured into a queue.

38. A system as claimed in claim 37 wherein the system function (12) is originally called by a process and the messages or exceptions are forwarded back to the process by the dummy function (6).

39. A system as claimed in any one of claims 23 to 38 wherein the system objects (16) are one or more of the set of program objects, configuration objects, queues, and space/memory mapped objects.

40. A system as claimed in any one of claims 23 to 39 wherein the changed system objects are those system objects which have been created, changed or deleted.

41. A system as claimed in any one of claims 23 to 40 wherein the processor is an AS/400 processor.

42. A system as claimed in any one of claims 23 to 41 wherein the processor is operating under the OS/400 operating system.

## Patentansprüche

1. Computer-implementiertes Verfahren zum Journaling von Änderungen an Systemobjekten (16) in einem Betriebssystem mit einem Prozessor, wobei das Verfahren die Schritte enthält und der Prozessor **gekennzeichnet ist durch**:
i) Ausführen einer Dummy-Funktion (6) anstelle einer Systemfunktion (12), wenn die Systemfunktion (12) aufgerufen wird,
ii) Ausführen der Systemfunktion (12) unter Steuerung der Dummy-Funktion (6) und
iii) Erzeugen, **durch** die Dummy-Funktion (6), von Kopien der **durch** die Ausführung der Systemfunktion (12) geänderten Systemobjekte (16) zum Journaling.

2. Verfahren wie in Anspruch 1 beansprucht, wobei die Dummy-Funktion (6) anstelle der Systemfunktion (12) ausgeführt wird, indem der Dummy-Funktion (6) ein duplizierter Aufrufname zugeordnet wird und indem der Prozessor dazu eingerichtet ist, der Ausführung der Systemfunktion (12) zuvorzukommen, wenn sie aufgerufen wird.

3. Verfahren wie in einem der Ansprüche 1 bis 2 beansprucht, wobei die Dummy-Funktion einen Ausstiegspunkt (9) enthält und für den Ausstiegspunkt (9) ein Ausstiegsprogramm (8) registriert ist.

4. Verfahren wie in Anspruch 3 beansprucht, wobei während der Ausführung der Dummy-Funktion (6) die Ausstiegsfunktion (8) ausgeführt wird, wenn der Ausstiegspunkt (9) erreicht wird.

5. Verfahren wie in Anspruch 4 beansprucht, wobei die Ausführung der Systemfunktion (12) durch das Ausstiegsprogramm (8) erledigt wird.

6. Verfahren wie in Anspruch 5 beansprucht, wobei die durch die Ausführung der Systemfunktion (12) geänderten Systemobjekte (16) durch das Ausstiegsprogramm (8) erfasst werden.

7. Verfahren wie in Anspruch 6 beansprucht, wobei das Ausstiegsprogramm (8) Kopien von Systemobjekten (16), die von dem Ausstiegsprogramm (8) erfasst sind, erzeugt.

8. Verfahren wie in Anspruch 4 beansprucht, wobei die Ausführung der Systemfunktion (12) von der Dummy-Funktion (6) erledigt wird.

9. Verfahren wie in Anspruch 8 beansprucht, wobei die durch die Ausführung der Systemfunktion (12) veränderten Systemobjekte (16) durch die Dummy-Funktion (6) erfasst werden.

10. Verfahren wie in Anspruch 9 beansprucht, wobei das Ausstiegsprogramm (8) Kopien von durch die Dummy-Funktion (6) erfassten Systemobjekten (16) erzeugt.

11. Verfahren wie in einem der Ansprüche 1 bis 10 beansprucht, wobei die Kopien der Systemobjekte (16) auf einer Platte gesichert werden.

12. Verfahren wie in einem der Ansprüche 1 bis 11 beansprucht, wobei die Kopien der Systemobjekte (16) zum Journaling zu einem Datenbanksystem per Streaming übertragen werden.

13. Verfahren wie in Anspruch 12 beansprucht, wobei das Datenbanksystem mit einem Replikationssystem ausgestattet ist.

14. Verfahren wie in Anspruch 13 beansprucht, wobei das Replikationssystem die Kopien der Systemobjekte (16) in eine oder mehrere lokale Datenbanken oder entfernt verwaltete Datenbanken repliziert.

15. Verfahren wie in einem der Ansprüche 1 bis 14 beansprucht, wobei Nachrichten oder Ausnahmebedingungen, die von der Systemfunktion (12) erzeugt werden, in einer Warteschlange erfasst werden.

16. Verfahren wie in Anspruch 15 beansprucht, wobei die Systemfunktion (12) ursprünglich durch einen Prozess aufgerufen wird und die Nachrichten oder Ausnahmebedingungen durch die Dummy-Funktion (6) an den Prozess weitergegeben werden.

17. Verfahren wie in einem der Ansprüche 1 bis 16 beansprucht, wobei die Systemobjekte (16) eines oder mehrere aus einem Satz von Programmobjekten, Konfigurationsobjekten, Warteschlangen oder in einen Raum/Speicher abgebildete Objekte sind.

18. Verfahren wie in einem der Ansprüche 1 bis 17 beansprucht, wobei die geänderten Systemobjekte (16) solche Systemobjekte sind, die erzeugt, geändert oder gelöscht worden sind.

19. Verfahren wie in einem der Ansprüche 1 bis 18 beansprucht, wobei die Systemfunktionen (12) OS/400-Systemfunktionen sind.

20. Verfahre wie in einem der Ansprüche 1 bis 19 beansprucht mit den Schritten:
i) Ausführen der Systemfunktion (12), während der Änderungen an Systemobjekten erfolgen, und
ii) Journaling von Änderungen der Systemobjekte (16) während der Ausführung der Systemfunktion (12).

21. Verfahren wie in Anspruch 20 beansprucht, wobei Änderungen der Systemobjekte (16) durch Journaling erfasst werden, indem Journaling-Befehle in den Code der Systemfunktionen (12) integriert werden.

22. Verfahren wie in Anspruch 20 beansprucht, wobei Änderungen der Systemobjekte (16) durch Journaling erfasst werden, indem den Systemfunktionen (12) Ausstiegspunkte (9) zugeordnet werden und während der Ausführung der Systemfunktion (12) ein Ausstiegsprogramm (8) aufgerufen wird.

23. System zum Journaling von Änderungen an Systemobjekten (16), **dadurch gekennzeichnet, dass** das System aufweist:
i) einen Prozessor, der dazu eingerichtet ist, eine Dummy-Funktion (6) anstelle einer Systemfunktion (12) auszuführen, wenn die Systemfunktion (12) aufgerufen wird, wobei die Dummy-Funktion (6) die Systemfunktion (12) ausführt und zum Journaling Kopien der Systemobjekte (16) erzeugt, die durch die Ausführung der Systemfunktion (12) verändert sind, und
ii) Speicher zur Verwendung durch den Prozessor während der Ausführung.

24. System wie Anspruch 23 beansprucht, wobei die Dummy-Funktion (6) anstelle der Systemfunktion (12) ausgeführt wird, indem der Dummy-Funktion (6) ein Aufrufname zugewiesen wird, der ein Duplikat des Aufrufnamens der Systemfunktion (12) ist, um der Ausführung der Systemfunktion (12) zuvorzukommen.

25. System wie in einem der Ansprüche 23 bis 24 beansprucht, wobei die Dummy-Funktion (6) einen Ausstiegspunkt (9) umfasst und für den Ausstiegspunkt (9) ein Ausstiegsprogramm (8) registriert ist.

26. System wie in Anspruch 25 beansprucht, wobei während der Ausführung der Dummy-Funktion (6) bei Erreichen des Ausstiegspunkts (9) das Ausstiegsprogramm (8) ausgeführt wird.

27. System wie in Anspruch 26 beansprucht, wobei die Ausführung der Systemfunktion (12) durch das Ausstiegsprogramm (8) erledigt wird.

28. System wie in Anspruch 27 beansprucht, wobei die durch die Ausführung der Systemfunktion (12) geänderten Systemobjekte (16) durch das Ausstiegsprogramm (8) erfasst werden.

29. System wie in Anspruch 28 beansprucht, wobei das Ausstiegsprogramm (8) Kopien der durch das Ausstiegsprogramm (8) erfassten Systemobjekte (16) erzeugt.

30. System wie in Anspruch 26 beansprucht, wobei die Ausführung der Systemfunktion (12) durch das Dummy-Programm (6) erledigt wird.

31. System wie in Anspruch 30 beansprucht, wobei die durch die Ausführung der Systemfunktion (12) geänderten Systemobjekte (16) durch das Dummy-Programm (6) erfasst werden.

32. System wie in Anspruch 31 beansprucht, wobei das Ausstiegsprogramm (8) Kopien der durch das Dummy-Programm (6) erfassten Systemobjekte (16) erzeugt.

33. System wie in einem der Ansprüche 23 bis 32 beansprucht, wobei die Kopien der Systemobjekte (16) auf einer Platte gesichert werden.

34. System wie in einem der Ansprüche 23 bis 33 beansprucht, wobei die Kopien der Systemobjekte (16) zum Journaling durch Streaming an ein Datenbanksystem weitergeleitet werden.

35. System wie in Anspruch 34 beansprucht, wobei das Datenbanksystem mit einem Replikationssystem versehen ist.

36. System wie in Anspruch 35 beansprucht, wobei das Replikationssystem die Kopien der Systemobjekte (16) in eine oder mehrere lokale oder entfernt abgelegte Datenbanken repliziert.

37. System wie in einem der Ansprüche 23 bis 36 beansprucht, wobei Nachrichten oder Ausnahmebedingungen, die von der Systemfunktion (12) erzeugt sind, in einer Wartschlange erfasst werden.

38. System wie in Anspruch 37 beansprucht, wobei die Systemfunktion (12) ursprünglich durch einen Prozess aufgerufen wird und die Nachrichten oder Ausnahmebedingungen durch die Dummy-Funktion (6) an den Prozess weitergeleitet werden.

39. System wie in einem der Ansprüche 23 bis 38 beansprucht, wobei die Systemobjekte (16) eines oder mehrere aus einem Satz von Programmobjekten, Konfigurationsobjekten, Warteschlangen oder von in einen Raum/Speicher abgebildeten Objekten sind.

40. System wie in einem der Ansprüche 23 bis 39 beansprucht, wobei die geänderten Systemobjekte solche Systemobjekte sind, die erzeugt, geändert oder gelöscht worden sind.

41. System wie in einem der Ansprüche 23 bis 40 beansprucht, wobei der Prozessor ein AS/400-Prozessor ist.

42. System wie in einem der Ansprüche 23 bis 41 beansprucht, wobei der Prozessor unter dem OS/400-Betriebssystem arbeitet.

## Revendications

1. Procédé mis en oeuvre par ordinateur pour la journalisation de changements sur des objets de système (16) dans un système d'exploitation avec un processeur, le procédé comprenant les étapes suivantes et **caractérisé en ce que** le processeur :
i) exécute une fonction factice (6) à la place d'une fonction de système (12) quand la fonction de système (12) est appelée ;
ii) exécute la fonction de système (12), sous le contrôle de la fonction factice (6) ; et
iii) génère, par la fonction factice (6), des copies d'objets de système (16) changés par l'exécution de la fonction de système (12), pour la journalisation.

2. Procédé selon la revendication 1, dans lequel la fonction factice (6) est exécutée à la place de la fonction de système (12) en attribuant un nom d'appel en double à la fonction factice (6) et en agençant le processeur pour empêcher l'exécution de la fonction de système (12) quand il est appelé.

3. Procédé selon l'une quelconque des revendications 1 à 2, dans lequel la fonction factice (6) comprend un point de sortie (9) et un programme de sortie (8) est enregistré pour le point de sortie (9).

4. Procédé selon la revendication 3, dans lequel, durant l'opération de la fonction factice (6), le programme de sortie (8) est exécuté lorsque le point de sortie (9) est atteint.

5. Procédé selon la revendication 4, dans lequel l'exécution de la fonction de système (12) est gérée par le programme de sortie (8).

6. Procédé selon la revendication 5, dans lequel les objets de système (16) changés par l'exécution de la fonction de système (12) sont capturés par le programme de sortie (8).

7. Procédé selon la revendication 6, dans lequel le programme de sortie (8) génère des copies des objets de système (16) capturés par le programme de sortie (8).

8. Procédé selon la revendication 4, dans lequel l'exécution de la fonction de système (12) est gérée par la fonction factice (6).

9. Procédé selon la revendication 8, dans lequel les objets de système (16) changés par l'exécution de la fonction de système (12) sont capturés par la fonction factice (6).

10. Procédé selon la revendication 9, dans lequel le programme de sortie (8) génère des copies des objets de système (16) capturés par la fonction factice (6).

11. Procédé selon l'une quelconque des revendications 1 à 10, dans lequel les copies des objets de système (16) sont sauvegardées sur un disque.

12. Procédé selon l'une quelconque des revendications 1 à 11, dans lequel les copies des objets de système (16) sont transmises en continu à un système de base de données pour la journalisation.

13. Procédé selon la revendication 12, dans lequel le système de base de données est incorporé dans un système de réplication.

14. Procédé selon la revendication 13, dans lequel le système de réplication réplique les copies des objets de système (16) vers une ou plusieurs bases de données locales ou à distance.

15. Procédé selon l'une quelconque des revendications 1 à 14, dans lequel des messages ou des exceptions générés par la fonction de système (12) sont capturés dans une file d'attente.

16. Procédé selon la revendication 15, dans lequel la fonction de système (12) est appelée initialement par un processus et les messages ou exceptions sont envoyés en retour au processus par la fonction factice (6).

17. Procédé selon l'une quelconque des revendications 1 à 16, dans lequel les objets de système (16) sont un ou plusieurs de l'ensemble d'objets de programme, d'objets de configuration, de files d'attente et d'objets mappés espace/mémoire.

18. Procédé selon l'une quelconque des revendications 1 à 17, dans lequel les objets de système changés (16) sont les objets de système qui ont été créés, changés ou supprimés.

19. Procédé selon l'une quelconque des revendications 1 à 18, dans lequel les fonctions de système (12) sont des fonctions de système OS/400.

20. Procédé selon l'une quelconque des revendications 1 à 19, comprenant les étapes suivantes :
i) l'exécution de la fonction de système (12) durant laquelle des changements d'objets de système se produisent ; et
ii) la journalisation de changements sur des objets de système (16) durant l'exécution de la fonction de système (12).

21. Procédé selon la revendication 20, dans lequel des changements d'objets de système (16) sont journalisés en intégrant des commandes de journalisation dans les codes des fonctions de système (12).

22. Procédé selon la revendication 20, dans lequel des changements d'objets de système (16) sont journalisés en associant des points de sortie (9) à la fonction de système (12) et en appelant un programme de sortie (8) durant l'exécution de la fonction de système (12).

23. Système pour la journalisation de changements sur des objets de système (16) **caractérisé en ce que** le système comprend :
i) un processeur adapté pour exécuter une fonction factice (6) à la place d'une fonction de système (12) quand la fonction de système (12) est appelée, dans lequel la fonction factice (6) exécute la fonction de système (12) et génère des copies d'objets de système (16) changés par l'exécution de la fonction de système (12) pour la journalisation ; et
ii) une mémoire pour l'utilisation par le processeur durant l'exécution.

24. Système selon la revendication 23, dans lequel la fonction factice (6) est exécutée à la place de la fonction de système (12) en attribuant un nom d'appel à la fonction factice (6) qui est un duplicata du nom d'appel de la fonction de système (12) pour empêcher l'exécution de la fonction de système (12).

25. Système selon l'une quelconque des revendications 23 à 24, dans lequel la fonction factice (6) comprend un point de sortie (9) et un programme de sortie (8) est enregistré pour le point de sortie (9).

26. Système selon la revendication 25, dans lequel, durant l'opération de la fonction factice (6), le programme de sortie (8) est exécuté lorsque le point de sortie (9) est atteint.

27. Système selon la revendication 26, dans lequel l'exécution de la fonction de système (12) est gérée par le programme de sortie (8).

28. Système selon la revendication 27, dans lequel les objets de système (16) changés par l'exécution de la fonction de système (12) sont capturés par le programme de sortie (8).

29. Système selon la revendication 28, dans lequel le programme de sortie (8) génère des copies des objets de système (16) capturés par le programme de sortie (8).

30. Système selon la revendication 26, dans lequel l'exécution de la fonction de système (12) est gérée par le programme factice (6).

31. Système selon la revendication 30, dans lequel les objets de système (16) changés par l'exécution de la fonction de système (12) sont capturés par le programme factice (6).

32. Système selon la revendication 31, dans lequel le programme de sortie (8) génère des copies des objets de système (16) capturés par le programme factice (6).

33. Système selon l'une quelconque des revendications 23 à 32, dans lequel les copies des objets de système (16) sont sauvegardées sur un disque.

34. Système selon l'une quelconque des revendications 23 à 33, dans lequel les copies des objets de système (16) sont transmises en continu à un système de base de données pour la journalisation.

35. Système selon la revendication 34, dans lequel le système de base de données est incorporé dans un système de réplication.

36. Système selon la revendication 35, dans lequel le système de réplication réplique les copies des objets de système (16) vers une ou plusieurs bases de données locales ou à distance.

37. Système selon l'une quelconque des revendications 23 à 36, dans lequel des messages ou des exceptions générés par la fonction de système (12) sont capturés dans une file d'attente.

38. Système selon la revendication 37, dans lequel la fonction de système (12) est appelée initialement par un processus et les messages ou exceptions sont envoyés en retour au processus par la fonction factice (6).

39. Système selon l'une quelconque des revendications 23 à 38, dans lequel les objets de système (16) sont un ou plusieurs de l'ensemble d'objets de programme, d'objets de configuration, de files d'attente et d'objets mappés espace/mémoire.

40. Système selon l'une quelconque des revendications 23 à 39, dans lequel les objets de système changés sont les objets de système qui ont été créés, changés ou supprimés.

41. Système selon l'une quelconque des revendications 23 à 40, dans lequel le processeur est un processeur AS/400.

42. Système selon l'une quelconque des revendications 23 à 41, dans lequel le processeur fonctionne sous le système d'exploitation OS/400.
